# EUROPÄISCHE PATENTSCHRIFT

(11) **EP 2 843 283 B1**
(45) Veröffentlichungstag und Bekanntmachung des Hinweises auf die Patenterteilung: **11.05.2022**
(21) Anmeldenummer: 14181343.6
(22) Anmeldetag: 19.08.2014
(51) Int. Cl.: F16L 19/02

(54) **SAUGFÖRDERANLAGE**
SUCTION CONVEYOR SYSTEM
SYSTÈME DE CONVOYEUR PAR SUCCION

(30) Priorität: 27.08.2013 DE 202013103855 U
(43) Veröffentlichungstag der Anmeldung: 04.03.2015
(73) Patentinhaber: Siekman, Marco, 32049 Herford (DE)
(72) Erfinder: Siekman, Marco, 32049 Herford (DE)
(74) Vertreter: Pelster Behrends Patentanwälte PartG mbB

(56) Entgegenhaltungen:
- EP-A1- 0 626 535
- CA-A1- 2 428 936
- DE-C- 330 544
- GB-A- 2 331 340
- US-A- 2 676 781
- US-A- 2 971 779
- US-A- 3 672 704
- US-A1- 2004 207 202

## Beschreibung

Die Erfindung betrifft eine Saugförderanlage für Schüttgüter, mit mindestens einer flexiblen Saugleitung, die mit einem Kupplungsstück an ein komplementäres Kupplungsstück eines von mehreren Saugrohrstutzen ankuppelbar ist.

Solche Saugförderanlagen dienen beispielsweise zum Verteilen von Kunststoffgranulat auf verschiedene Maschinen oder Anlagen, in denen das Granulat weiter verarbeitet oder behandelt wird. Die Saugstutzen und die zugehörigen Kupplungen und Saugleitungen bilden beispielsweise einen sogenannten Kupplungsbahnhof, der es erlaubt, die Förderwege nach Bedarf zu konfigurieren, indem die Saugleitungen mit den jeweils gewünschten Saugrohrstutzen verbunden werden. Die Kupplungen sollten sich einfach ein- und auskuppeln lassen und dabei materialschonend und außerdem gasdicht sein, damit keine Fremdluft in das Saugfördersystem eingesaugt wird. Herkömmliche Kupplungen sind zumeist als Flansch- oder Schraubkupplungen mit elastischen Dichtringen ausgebildet (CA 2 428 936 A1 und US 2004/207202 A1).

Aus EP 0 626 535 A1 ist eine Kupplung für Ölleitungen für die Erdölförderindustrie bekannt, bei der eines der Kupplungsstücke eine zylindrische Hülse aufweist, in die ein Rohrabschnitt des anderen Kupplungsstückes passend einsteckbar ist und die sich an einer Schulter auf einen mit dem Innenquerschnitt des Rohrabschnitts bündigen Querschnitt verengt, und dass die Stirnfläche des Rohrabschnitts im eingekuppelten Zustand eine Metall-auf-Metall Dichtung mit der Schulter bildet. Eine weitere Kupplung gemäß dem Stand der Technik ist in Dokument GB2331340 offenbart.

Aufgabe der Erfindung ist es, eine Saugförderanlage zu schaffen, bei der sich die Kupplungen besonders einfach handhaben lassen.

Diese Aufgabe wird dadurch gelöst, dass eines der Kupplungsstücke eine zylindrische Hülse aufweist, in die ein Rohrabschnitt des anderen Kupplungsstückes passend einsteckbar ist und die sich an einer Schulter auf einen mit dem Innenquerschnitt des Rohrabschnitts bündigen Querschnitt verengt, und dass die Stirnfläche des Rohrabschnitts im eingekuppelten Zustand eine Metall-auf-Metall Dichtung mit der Schulter bildet.

Dadurch, dass der Rohrabschnitt passend in die Hülse einsteckbar ist, wird eine weitgehend gasdichte Verbindung erreicht, ohne dass die Kupplungsstücke fest miteinander verriegelt werden müssen. Aufgrund des in der Saugförderanlage herrschenden Unterdruckes wird dann der Rohrabschnitt tiefer in die Hülse eingesogen, bis seine Stirnfläche an der Schulter der Hülse anschlägt und mit dieser die Metall-auf-Metall Dichtung bildet. Diese Dichtung hat den Vorteil, dass sie sich nicht festsaugt und, anders als beispielsweise eine O-Ring Dichtung, die Kupplungsstücke auch nicht klemmend miteinander verbindet, so dass sich die Kupplungen sehr einfach wieder voneinander lösen und umstecken lassen. Außerdem lässt sich durch diese Gestaltung der Dichtung erreichen, dass das geförderte Material nur mit dem Material, beispielsweise Edelstahl, in Berührung kommt, aus dem die Hülse und der Rohrabschnitt gefertigt sind, so dass eine Schädigung des Fördergutes durch Dichtungen und andere Fremdmaterialien vermieden wird.

Vorteilhafte Ausgestaltungen und Weiterbildungen sind in den Unteransprüchen angegeben.

Bevorzugt ist die Schulter konisch ausgebildet, vorzugsweise mit einem stumpfen Konuswinkel von 45° oder mehr, und die Stirnfläche des Rohrabschnitts bildet einen dazu komplementären Konus. Der Konus des Rohrabschnitts erleichtert dann zugleich das Einführen dieses Rohrabschnitts in die Hülse. Zusätzlich kann die Hülse an ihrer Öffnung eine Einlaufschräge aufweisen.

Erfindungsgemäß sind die Kupplungsstücke durch einen Uberwurf zusätzlich aneinander verriegelt. Der Uberwurf weist ein mehrgängiges Gewinde auf, so dass bereits bei einer Drehung um einen relativ kleinen Winkel, beispielsweise 90° oder weniger, eine sichere Verbindung zwischen den Kupplungsstücken hergestellt wird, die sich bei Bedarf schnell wieder lösen lässt.

Im folgenden wird ein Ausführungsbeispiel anhand der Zeichnung näher erläutert.

Es zeigen:
- Fig. 1: einen axialen Schnitt durch einen Kupplungsbereich einer erfindungsgemäßen Saugförderanlage; und
- Fig. 2: eine Teilansicht der Saugförderanlage.

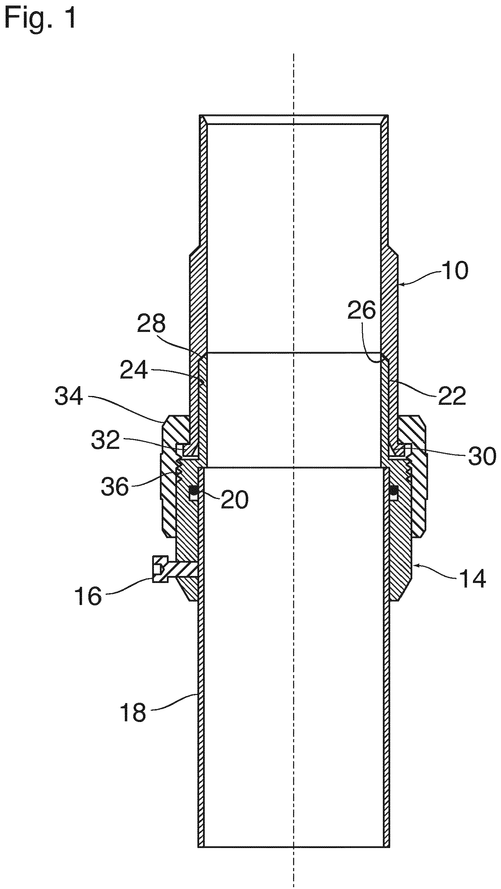

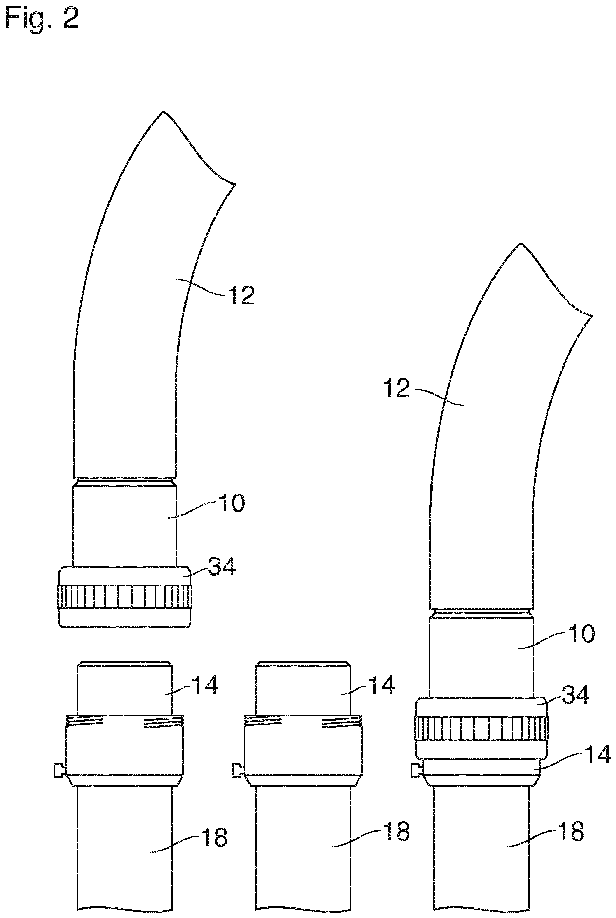

In Fig. 1 ist ein erstes Kupplungsstück 10 gezeigt, das beispielsweise aus Edelstahl hergestellt ist und in ein Ende einer flexiblen Saugleitung 12 (Fig. 2) eingesteckt ist.

Ein zweites Kupplungsstück 14 ist ebenfalls aus Edelstahl hergestellt und ist mit einer Klemmschraube 16 auf einem Ende eines Saugrohrstutzens 18 befestigt, der beispielsweise ebenfalls aus Edelstahl bestehen kann. Das Kupplungsstück 14 ist mit einer O-Ring Dichtung 20 am Saugrohrstutzen 18 abgedichtet und bildet einen im Durchmesser reduzierten Rohrabschnitt 22, der sich in axialer Verlängerung an das Ende des Saugrohrstutzens 18 anschließt.

Das Kupplungsstück 10 bildet eine zylindrische Hülse 24, deren Innendurchmesser mit dem Außendurchmesser des Rohrabschnitts 22 übereinstimmt, so dass sich der Rohrabschnitt 22 vom offenen Ende her passend in die Hülse 24 einstecken lässt. Die Einstecktiefe ist dabei größer als der Innenradius des Rohrabschnitts 22.

Der Innendurchmesser der Hülse 24 verengt sich an einer Schulter 26 auf einen Wert, der exakt mit dem Innendurchmesser des Rohrabschnitts 22 übereinstimmt. Durch den in die Hülse 24 eingesteckten Rohrabschnitt 22 werden somit die Kupplungsstücke 10 und 14 so miteinander ausgerichtet, dass ihre Innenquerschnitte exakt miteinander bündig sind und keine Stufe gebildet wird, die zu einer Schädigung des geförderten Materials führen könnte.

Die axiale Länge des Rohrabschnitts 22 ist etwas größer als die axiale Länge der Hülse 24 bis zu der Stufe 26. Wenn der Rohrabschnitt 22 ganz in die Hülse eingesteckt ist, liegt er deshalb mit seiner Stirnfläche 28 an der Schulter 26 an. Die Stirnfläche 28 und die Schulter 26 haben zueinander komplementäre Formen, so dass sie eine Metall-auf-Metall Dichtung bilden. Im gezeigten Beispiel haben die Schulter 26 und die Stirnfläche 28 die Form eines stumpfen Konus mit einem Konuswinkel von höchstens 45°. Wenn in der Saugförderleitung und dem Saugrohrstutzen ein Unterdruck herrscht, so bewirkt dieser Unterdruck, da zwischen dem Außenumfang des Rohrabschnitts 22 und dem Innenumfang der Hülse 24 praktisch keine Fremdluft eindringen kann, dass der Rohrabschnitt 22 tiefer in die Hülse eingesaugt wird, bis seine Stirnfläche 28 an der Schulter 26 anliegt und damit für eine sichere Abdichtung sorgt, ohne dass sich jedoch die Kupplungsstücke aneinander verklemmen. Wenn der Unterdruck aufgehoben wird, lassen sich daher die Kupplungsstücke 10 und 14 sehr leicht wieder voneinander lösen.

Die Hülse 24 weist an ihrem offenen unteren Ende eine konische Einlaufschräge 30 mit einem spitzeren Konuswinkel auf. Dadurch wird beim Herstellen der Kupplungsverbindung das Einführen des Rohrabschnitts 22 in die Hülse 24 erleichtert.

An ihrem äußeren Umfang hat die Hülse 24 am unteren Ende einen Bund 32, auf dem sich ein Überwurf 34 aus Kunststoff abstützt, der zur zusätzlichen Sicherung der Kupplungsverbindung dient. Der Überwurf 34 und das Kupplungsstück 14 haben zueinander komplementäre viergängige Gewinde 36. Somit genügt bereits eine Drehung des Überwurfes 34 um einen Winkel von 90°, um die beiden Kupplungsstücke 10 und 14 selbsthemmend aneinander zu fixieren.

Fig. 2 ist eine vereinfachte Darstellung eines sogenannten Kupplungsbahnhofs der Saugförderanlage. In diesem Kupplungsbahnhof ist eine Vielzahl von Saugrohrstutzen 18 mit zugehörigen Kupplungsstücken 14 in einer oder mehreren Reihen angeordnet. Weiterhin sind mehrere flexiblen Saugleitungen 12 vorhanden, die jeweils ein Kupplungsstück 10 haben und sich variabel mit den Saugrohrstutzen 18 verbinden lassen, so dass je nach Bedarf unterschiedliche Förderwege realisiert werden können. Die Erfindung erlaubt es, die Kupplungsverbindungen sehr schnell mit einem einzigen Handgriff, nämlich einer 90°-Drehung des Überwurfes 34, zu lösen und dann ebenso schnell an einem anderen Saugrohrstutzen eine neue Kupplungsverbindung herzustellen.

## Patentansprüche

1. Saugförderanlage für Schüttgüter, mit zwei zueinander komplementären Kupplungsstücken (10, 14) und mit mindestens einer flexiblen Saugleitung (12), die mit dem einen Kupplungsstück (10) an das komplementäre Kupplungsstück (14) eines von mehreren Saugrohrstutzen (18) angekuppelt ist,
wobei eines der Kupplungsstücke eine zylindrische Hülse (24) aufweist, in die ein Rohrabschnitt (22) des anderen Kupplungsstückes passend einsteckbar ist und die sich an einer Schulter (26) auf einen mit dem Innenquerschnitt des Rohrabschnitts (22) bündigen Querschnitt verengt, und dass die Stirnfläche (28) des Rohrabschnitts (22) im eingekuppelten Zustand eine Metall-auf-Metall Dichtung mit der Schulter (26) bildet,
wobei die Hülse (24) am äußeren Umfang einen Bund (32) aufweist, auf dem sich ein Überwurf (34) aus Kunststoff abstützt, der mit dem Kupplungsstück (14) verschraubbar ist, das den Rohrabschnitt (22) bildet,
wobei der Überwurf (34) zum Verschrauben ein mehrgängiges Gewinde (36) aufweist, und wobei im angekuppelten Zustand die Kupplungsstücke (10, 14) durch den Überwurf (34) zusätzlich aneinander verriegelt sind,.

2. Saugförderanlage nach Anspruch 1, bei der die Kupplungsstücke (10, 14) insgesamt aus Metall, vorzugsweise aus Edelstahl bestehen.

3. Saugförderanlage nach Anspruch 1 oder 2, bei der die Schulter (26) der Hülse (24) und die Stirnfläche (28) des Rohrabschnitts (22) zueinander komplementäre konische Formen haben, mit einem Konuswinkel von nicht mehr als 45°.

4. Saugförderanlage nach einem der vorstehenden Ansprüche, bei der die Hülse (24) am offenen Ende eine Einlaufschräge (30) aufweist.

## Claims

1. Suction conveyor system for bulk materials, with two complementary coupling elements (10, 14) and with at least one flexible suction pipe (12), which is coupled by one coupling element (10) to the complementary coupling element (14) of one of several suction pipe sockets (18),
wherein one of the coupling elements has a cylindrical sleeve (24) into which a tube section (22) of the other coupling element can be fittingly inserted and which narrows at a shoulder (26) to a cross-section flush with the inner cross-section of the tube section (22), and that the end face (28) of the tube section (22) forms a metal-to-metal seal with the shoulder (26) in the coupled state, wherein the sleeve (24) has a collar (32) on the outer circumference, on which a plastic coupler (34) is supported, which is screwable to the coupling element (14) that forms the tube section (22),
wherein the coupler (34) has a multi-start thread (36) for screwing,
and wherein, in the coupled state, the coupling elements (10, 14) are additionally locked to one another by the coupler (34).

2. Suction conveyor system according to claim 1, wherein the coupling elements (10, 14) altogether consist of metal, preferably of stainless steel.

3. Suction conveyor system according to claim 1 or 2, wherein the shoulder (26) of the sleeve (24) and the end face (28) of the tube section (22) have complementary conical shapes, with a cone angle of not more than 45°.

4. Suction conveyor system according to any of the preceding claims, wherein the sleeve (24) has an inlet slope (30) at the open end.

## Revendications

1. Système de convoyeur par succion pour matériaux en vrac, doté de deux connecteurs (10, 14) complémentaires l'un de l'autre et d'au moins une conduite d'aspiration souple (12) qui est accouplée, avec ledit au moins un connecteur (10), au connecteur complémentaire (14) d'un de plusieurs manchons de tube d'aspiration (18), un des connecteurs présentant une douille cylindrique (24) dans laquelle un tronçon de tube (22) de l'autre connecteur peut être inséré de manière ajustée et qui se rétrécit au niveau d'un épaulement (26) pour atteindre une section droite à fleur de la section droite intérieure du tronçon de tube (22), et en ce que la face frontale (28) du tronçon de tube (22) forme, à l'état accouplé, un joint métal sur métal avec l'épaulement (26),
ladite douille (24) présentant sur la périphérie extérieure un collet (32) sur lequel s'appuie un moraillon (34) en matière plastique qui peut être vissé au connecteur (14) qui forme le tronçon de tube (22),
ledit moraillon (34) présentant un filetage (36) à plusieurs filets pour le vissage, et les connecteurs (10, 14) étant verrouillés l'un à l'autre de manière supplémentaire à l'état accouplé par ledit moraillon (34).

2. Système de convoyeur par succion selon la revendication 1, dans lequel les connecteurs (10, 14) sont globalement en métal, de préférence en acier inoxydable.

3. Système de convoyeur par succion selon la revendication 1 ou 2, dans lequel l'épaulement (26) de la douille (24) et la face frontale (28) du tronçon de tuyau (22) ont des formes coniques, complémentaires l'une de l'autre, avec un angle de cône ne dépassant pas 45°.

4. Système de convoyeur par succion selon l'une quelconque des revendications précédentes, dans laquelle la douille (24) présente un chanfrein d'entrée (30) à l'extrémité ouverte.
